# EUROPÄISCHE PATENTSCHRIFT

(11) **EP 3 068 519 B1**
(45) Veröffentlichungstag und Bekanntmachung des Hinweises auf die Patenterteilung: **21.03.2018**
(21) Anmeldenummer: 14802328.6
(22) Anmeldetag: 30.10.2014
(51) Int. Cl.: B01D 63/08, F16B 5/00, B01D 65/00

(54) **FILTERKASSETTEN MIT VERBINDUNGSSYSTEM**
FILTER CASSETTES WITH CONNECTING SYSTEM
CASSETTES DE FILTRE AVEC SYSTÈME DE LIAISON

(30) Priorität: 11.11.2013 DE 102013112370
(43) Veröffentlichungstag der Anmeldung: 21.09.2016
(73) Patentinhaber: Sartorius Stedim Biotech GmbH, 37079 Göttingen (DE)
(72) Erfinder: KRUMBEIN, Thomas, 37136 Ebergötzen (DE); WEISSHAAR, Stefan, 37139 Adelebsen (DE); BATES, Michael, Thrupp/Stroud Gloucestershire GL5 2BL (GB)
(74) Vertreter: Schneider, Peter Christian
(86) Internationale Anmeldenummer: PCT/EP2014/073302
(87) Internationale Veröffentlichungsnummer: WO 2015/067516

(56) Entgegenhaltungen:
- EP-A1- 2 388 061
- WO-A1-2012/148348
- WO-A1-2013/013785
- DE-U1- 8 322 594
- US-A- 3 494 469
- US-A- 5 192 434
- US-A1- 2008 135 499
- US-B1- 6 171 374

## Beschreibung

### Gebiet der Erfindung

Die Erfindung betrifft eine Filterkassette (4) mit einem Verbindungssystem mit mindestens einem Verbinder für eine in einen Filterhalter einsetzbare Filterkassette mit einer oder mehreren zwischen zwei Abschlussplatten angeordneten Filterschichten und zwischen den Filterschichten und/oder zwischen den Abschlussplatten und jeweils benachbarter Filterschicht angeordneten Dichtungen.

Die Erfindung betrifft weiterhin ein Verfahren zum Aufbringen einer Vorspannungskraft auf eine in einen Filterhalter einsetzbare Filterkassette mit einem Verbindungssystem nach einem der Ansprüche 1 bis 11.

### Stand der Technik

Filterkassetten, wie sie zur Aufreinigung mittels Membranadsorber oder zur Filtration in der Tiefen-, Ultra- oder Mikrofiltration verwendet werden verwendet werden, bestehen aus einer oder mehreren zwischen zwei Abschlussplatten angeordneten Filterschichten und zwischen den Filterschichten angeordneten Dichtungen. Zur Filtration werden die Filterkassetten in einem Filterhalter, wie er beispielsweise aus der DE 37 08 733 C2 oder aus dem Firmenprospekt "SARTOFLOW® 10 Stainless Steel Holder" bekannt ist, zwischen zwei Spannplatten mit einer vorgebbaren Anpresskraft eingespannt. Nach dem Filtrationsvorgang wird die Anpresskraft durch Lösen der Spannplatten von der oder den Filterkassetten genommen. Dadurch kann es gelegentlich trotz der zwischen den Filterschichten angeordneten Dichtungen zu unerwünschten Leckagen an der Filterkassette kommen.

Aus der US 2013/0118971 A1 und aus der DE 2 028 325 A ist es bekannt, die für die Filtration notwendige Anpresskraft über die Abschlussplatten der Filterkassette über entsprechende Bolzen, die verschraubt werden, direkt aufzubringen.

Nachteilig dabei ist, dass es relativ schwierig ist, die Anpresskraft verfahrensabhängig genau und sicher einzustellen. Weiterhin nachteilig ist, dass diese bekannten Filterkassetten wegen ihrer starren Bolzenverbindungen nicht in die bekannten Filterhalter eingesetzt werden können.

Aus der DE 1 966 108 C3 ist beispielsweise eine Verrastung für Kabelverbinder bekannt, bei der auf einem langgestreckten biegsamen Band eine Reihe von Rastzähnen angeordnet ist. Zum Einrasten wird ein an einem Ende des Bandes angeordneter Kopf mit einer auf das Band abgestimmten Rastöffnung und einer Rastzunge (Klemmstück mit Zähnen) verrastend auf das andere Ende des Bandes aufgesteckt.

Aus der US 3 494 469 A ist ein Verbindungssystem für eine Filterkassette bekannt, wobei die Kassette in den Endplatten eine Mehrzahl von orthogonalen Durchgängen (seitlich offene Nuten) aufweist, in denen aus jeweils einem Bolzen und einer Mutter bestehende Verbinder fixiert sind.

Nachteilig dabei ist, dass der Bolzen als ein erstes Zugteil gegenüber der Mutter als zweites Zugteil nur durch eine Rotation der Mutter gegenüber den Bolzen längs verschieblich ist. Dies führt dazu, dass bei einer Druckbeaufschlagung die beiden Zugteile ohne zusätzliche Rotation nicht nachgeben können ohne verbogen oder zerstört zu werden. Ein Einsetzen mehrerer aus der US 3 494 469 A bekannten Systeme in einen Filterhalter ist nicht vorgesehen, was bedeutet, dass die von den Verbindern ausgeübte Kraft, die für den Betrieb notwendige Anpresskraft sein muss.

Aus der US 5 192 434 A ist ein Verbindungssystem bekannt, das eine Mehrzahl von Kassetten in einen Filterhalter zwischen Endplatten spannt. Eine Längsverschieblichkeit der beiden Zugteile ist nur durch eine zusätzliche Rotation möglich. Die in den Filterhalter einsetzbaren Kassetten weisen keine Verbinder auf und weisen deshalb auch keine auf sie einwirkende Vorspannungskraft auf.

Aus der WO 2013/013785 A1 ist ein Membranmodul bekannt, bei dem ein zwischen einer Oberplatte und einer unteren Druckplatte angeordneter Membrantaschenstapel über ein Verbindungssystem verspannt wird. Eine Längsverschieblichkeit der beiden Zugteile ist nur durch eine zusätzliche Rotation möglich. Dies führt dazu, dass bei einer Druckbeaufschlagung die beiden Zugteile ohne zusätzliche Rotation nicht nachgeben können ohne verbogen oder zerstört zu werden. Ein Einsetzen mehrerer aus der WO 2013/013785 A1 bekannten Systeme in einen Filterhalter ist nicht vorgesehen, was bedeutet, dass die von dem Verbindungssystem ausgeübte Kraft, die für den Betrieb notwendige Anpresskraft sein muss.

Auch aus der US 6171 374 B1 ist es bekannt, Filterstapel zwischen zwei Endplatten über Zugstangen einzuspannen Eine Längsverschieblichkeit der beiden Zugteile wäre auch hier nur durch eine zusätzliche Rotation möglich. Eine zusätzliche Druckbeaufschlagung ist auch hier nicht vorgesehen.

Die EP 2 388 061 A1 offenbart eine Mehrzahl von Filterkassetten 202, die zusammen mit einer Verteilerplatte 203 in einen Filterhalter (clamping plates 204, 234, floating actuator 210) eingespannt werden. Dabei erzeugt ein hydraulischer Stellantrieb (floating actuator 210) über seine Zugteile den für den Betrieb notwendigen Anpressdruck.

Die einzelnen Filterkassetten 202 weisen keine Verbinder auf und damit auch keine Vorspannkraft, die von der Anpresskraft des Filterhalters überlagert werden könnte.

Aus der DE 83 22 594 U1 ist ein Verbinder zur festen Verbindung mehrerer Bauteile miteinander bekannt. Der Verbinder ist bandartig ausgebildet und besitzt an seinen freien Enden jeweils zwei Nasen. Zur Verspannung der Bauteile gegeneinander werden die beiden freien Enden des Verbinders gegeneinander verdrillt, so dass sich der Verbinder verkürzt und die Nasen sich gegen die Außenflächen der miteinander verbundenen Bauteile anlegen.

Nachteilig dabei ist, dass der Verbinder an seinen Enden mit deren Nasen über den Durchmesser eines Durchgangskanales der Bauelemente hinausragen muss, was die Montage erschwert. Insbesondere müssen die Nasen des einen Endes zur Montage während der Durchführung durch den Durchgangskanal gegeneinander federnd zusammengedrückt werden.

### Aufgabenstellung

Es ist die Aufgabe der vorliegenden Erfindung, die bekannten Filterkassetten so zu verbessern, dass vor dem Einbringen in einen Filterhalter und nach der Entnahme aus dem Filterhalter zum einen ein Verrutschen der einzelnen Komponenten nicht möglich ist und dass zum anderen ein Austritt von Medium aus der Filterkassette zuverlässig vermieden wird.

Weitere Aufgabe der Erfindung ist es, die bekannten Verfahren zum Aufbringen eines Anpressdruckes auf die Filterkassette zu verbessern, um die oben geschilderten Nachteile zu vermeiden.

### Darlegung der Erfindung

Die Aufgabe bezüglich der Vorrichtung wird in Verbindung mit den Merkmalen des Oberbegriffs von Anspruch 1 dadurch gelöst, dass der Verbinder zwei längsverschieblich ineinandergreifende Zugteile aufweist, die mit ihren voneinander abgewandten Enden an den Abschlussplatten fixierbar sind, dass durch die Längsverschieblichkeit der beiden Zugteile eines jeden Verbinders der Verbinder bei Druckbeaufschlagung entsprechend nachgibt ohne verbogen oder zerstört zu werden, dass der Verbinder bei seiner maximalen Auslenkung eine Vorspannungskraft auf die Abschlussplatten ausübt, die die Abschlussplatten gegen eine oder mehrere Filterschichten zieht, und dass bei Aufbringen einer die Vorspannungskraft überlagernden Anpresskraft auf die Abschlussplatten die Zugteile entsprechend den Abschlussplatten aufeinander zuschiebbar sind, dass die Filterkassette mindestens einen Durchgangskanal zur Aufnahme des mindestens einen Verbinders aufweist, dass der Durchgangskanal in den Abschlussplatten jeweils in einen Absatz zur Aufnahme von endseitigen Fixierstücken des Verbinders übergeht, dass das erste Zugteil mit seinem endseitigen Fixierstück in den ersten Absatz des Durchgangskanales in der ersten Abschlussplatte einsetzbar ist, und dass das endseitige Fixierstück des zweiten Zugteiles auf das freie Ende des zweiten Zugteiles unter Aufbringung der vorgesehenen Vorspannungskraft aufsteckbar oder aufschraubbar ist.

Dadurch, dass der Verbinder im Wesentlichen zwei längsverschieblich ineinander greifende Zugteile aufweist, die mit ihren voneinander abgewandten Enden an den Abschlussplatten fixierbar sind, wobei der Verbinder bei seiner maximalen Auslenkung eine Vorspannungskraft auf die Abschlussplatten ausübt, werden die einzelnen Schichten der Filterkassette immer mit mindestens der Vorspannungskraft gegeneinander gepresst und somit abgedichtet. Gleichzeitig wird dadurch ein evtl. Verschieben der einzelnen Schichten gegeneinander verhindert. Durch die längsverschieblich ineinander greifenden Zugteile des Verbinders wird zudem das Aufbringen einer die Vorspannungskraft überlagernden Anpresskraft in einem Filterhalter durch das Aufeinanderzuschieben der Zugteile entsprechend der Bewegung der Abschlussplatten ermöglicht. Dabei wird eine Beschädigung der Verbinder zuverlässig vermieden. Nach Entnahme der Filterkassette aus dem Filterhalter wirkt weiterhin die Vorspannungskraft auf die Filterkassette, wodurch ein Austritt von Medium aus der Filterkassette zuverlässig vermieden wird. Weiterhin kann auch eine Mehrzahl von Filterkassetten in den Filterhalter eingespannt werden.

Ein weiterer Vorteil der Verbinder ist, dass die Dichtungen innerhalb der Filterkassette lediglich während der Anwendung der Filterkassette belastet werden und keiner Dauerbelastung ausgesetzt sind. Folglich sind auch kostengünstige Dichtungsmaterialien wie z.B. Thermoplaste einsetzbar. Die Dichtungen innerhalb der Filterkassette sind sowohl zwischen der Filterschicht und den Abschlussplatten als auch- bei mehreren Filterschichten- zwischen den jeweiligen Filterschichten angeordnet. Bei mehreren Filterschichten können außerdem sogenannte Abstandshalterplatten vorgesehen werden, gegenüber denen die Filterschichten ebenfalls über Dichtungen abgedichtet werden. Dabei bilden die Dichtungen eine Art Rahmen um die jeweiligen Schichten oder sind separat entlang der Peripherie der Schichten angeordnet.

Im Unterschied zu den aus dem Stand der Technik bekannten, mit Dichtungsmaterial umspritzten, Filtereinheiten können Fertigungstoleranzen mithilfe der Verbinder einfach und flexibel ausgeglichen werden.

Die Filterkassette weist mindestens einen Durchgangskanal zur Aufnahme des mindestens einen Verbinders auf, wobei der Durchgangskanal in den Abschlussplatten jeweils in einen Absatz zur Aufnahme von endseitigen Fixierstücken des Verbinders übergeht. Bei nur einem Durchgangskanal sollte dieser zentrisch angeordnet sein, um eine weitgehend gleichmäßige Anpresskraftverteilung zu erreichen.

Entsprechend einer bevorzugten Ausführungsform der Erfindung weist die Filterkassette in den Randbereichen der Abschlussplatten eine Mehrzahl von orthogonal zu den Abschlussplatten verlaufenden Durchgangskanälen zur Aufnahme jeweils eines Verbinders auf. Durch Anordnung einer Mehrzahl von Durchgangskanälen mit entsprechenden Verbindern wird eine gleichmäßige Verteilung der Vorspannungskraft sichergestellt.

Gemäß einer weiteren bevorzugten Ausführungsform der Erfindung ist das erste Zugteil als eine seitlich geöffnete Aufnahmebuchse ausgebildet, die an ihrem dem zweiten Zugteil zugewandten Ende eine einen Anschlag bildende Verengung aufweist und die an ihrem dem zweiten Zugteil abgewandten Ende in ein scheibenförmiges Fixierstück übergeht. Das zweite Zugteil kann dabei stimmgabelförmig ausgebildet sein und eine Griffstange aufweisen, an deren dem ersten Zugteil zugewandten freien Ende ein Anschlag angeordnet ist, wobei das freie Ende seitlich in die Aufnahmebuchse des ersten Zugteiles einsetzbar ist, wobei die Griffstange an ihrem dem ersten Zugteil abgewandten Ende in zwei parallele Gabelenden übergeht. Auf die Gabelenden, die seitlich angeordnete Rastzähne aufweisen, kann ein als Klemmscheibe ausgebildetes Fixierstück, das auf die Gabelenden abgestimmte Rastöffnungen mit Rastzungen aufweist, verrastend aufgesteckt werden. Die Gabelenden und das Fixierstück bilden dabei eine Verrastung, wie sie beispielsweise dem Fachmann von Kabelverbindern bekannt ist. In der Maximalposition des Verbinders schlägt die Anschlagscheibe des zylinderförmigen Griffes an die den Anschlag bildende Verengung der Aufnahmebuchse an, so dass zwischen den Fixierteilen des Verbinders eine Vorspannungskraft auf die Abschlussplatten ausgeübt wird.

Gemäß einer weiteren bevorzugten Ausführungsform der Erfindung weist das erste Zugteil zwei parallele Gabelenden auf, die an ihrem dem zweiten Zugteil zugewandten Ende u-förmig in einander übergehen, wobei die Gabelenden seitlich angeordnete Rastzähne aufweisen und wobei ein als Klemmscheibe ausgebildetes Fixierstück mit auf die Gabelenden abgestimmten Rastöffnungen mit Rastzungen verrastend auf die Gabelenden aufsteckbar ist. Entsprechend weist das zweite Zugteil ebenfalls zwei parallele Gabelenden auf, die an ihrem dem ersten Zugteil zugewandten Ende U-förmig in einander übergehen, wobei die Gabelenden seitlich angeordnete Rastzähne aufweisen, wobei ein als Klemmscheibe ausgebildetes Fixierstück mit auf die Gabelenden abgestimmten Rastöffnungen mit Rastzungen verrastend auf die Gabelenden aufsteckbar ist, und wobei das erste Zugteil und das zweite Zugteil mit ihren einander zugewandten u-förmigen Enden kettengliedartig ineinandergreifen. Diese Ausführungsform hat den Vorteil, dass das erste Zugteil und das zweite Zugteil gleich ausgebildet sein können.

Nach einer weiteren bevorzugten Ausführungsform der Erfindung weist das erste Zugteil zwei parallele Führungsstangen auf, die an ihrem dem zweiten Zugteil zugewandten Ende über ein Verbindungsteil miteinander verbunden sind. Dabei weisen auch hier die Führungsstangen seitlich angeordnete Rastzähne auf, wobei ein als Klemmscheibe ausgebildetes Fixierstück mit auf die Führungsstangen abgestimmten Rastöffnungen mit Rastzungen verrastend auf die Führungsstangen aufsteckbar ist. Das zweite Zugteil weist dabei ebenfalls zwei parallele Führungsstangen auf, die an ihrem dem ersten Zugteil zugewandten Ende über ein Verbindungsteil miteinander verbunden sind, wobei die Führungsstangen seitlich angeordnete Rastzähne aufweisen, wobei ein als Klemmscheibe ausgebildetes Fixierstück mit auf die Gabelenden abgestimmten Rastöffnungen mit Rastzungen verrastend auf die Gabelenden aufsteckbar ist, und wobei das erste Zugteil und das zweite Zugteil mit ihren einander zugewandten Enden ineinandergreifen.

Diese Ausführungsform weist ebenfalls den Vorteil auf, dass das erste Zugteil und das zweite Zugteil gleich ausgebildet sein können. Zudem besteht jedes Zugteil aus zwei gleichen Führungsstangen. Zusätzlich ist die Ausführungsform stabiler und leichter zu montieren.

Gemäß einer weiteren bevorzugten Ausführungsform der Erfindung ist das erste Zugteil als eine Aufnahmebuchse ausgebildet, die an ihrem dem zweiten Zugteil zugewandten Ende eine einen Anschlag bildende Verengung aufweist und die an ihrem dem zweiten Zugteil abgewandtem Ende in ein ringförmiges Fixierstück übergeht. Dabei kann das zweite Zugteil als eine Führungsstange ausgebildet sein, an deren dem ersten Zugteil zugewandten Ende eine Anschlagscheibe angeordnet ist. Die Führungsstange. weist an dem der Anschlagscheibe abgewandten Ende ein Gewinde auf, wobei das zweite Zugteil in das erste Zugteil einsteckbar ist, der Anschlag des zweiten Zugteils an den von der Verengung des ersten Zugteils gebildeten Anschlag anschlagbar ist, und wobei auf das gewindeseitige Ende der Führungsstange eine als Fixierstück ausgebildete Gewindehülse aufschraubbar ist.

Nach einer weiteren bevorzugten Ausführungsform der Erfindung kann bei dem zweiten Zugteil an seinem der Anschlagscheibe abgewandten freien Ende auf das Gewinde verzichtet werden, wenn das Fixierstück als eine federnde Klemmscheibe ausgebildet ist, die auf das freie Ende der Führungsstange einfach aufgesteckt werden kann.

Die Aufgabe bezüglich des Verfahrens wird in Verbindung mit dem Oberbegriff des Anspruches 12 dadurch gelöst, dass folgende Schritte durchgeführt werden:
a) Teilmontage eines Verbinders durch Ineinanderstecken zweier längsverschieblich ineinandergreifender Zugteile,
b) Einstecken des Verbinders in einen orthogonal zu den Abschlussplatten der Filterkassette angeordneten Durchgangskanal, wobei das erste Zugteil mit seinem endseitigen Fixierteil in einen ersten Absatz des Durchgangskanales in der ersten Abschlussplatte eingesetzt wird und wobei das zweite Zugteil mit seinem freien Ende aus den in der zweiten Abschlussplatte angeordneten zweiten Absatz des Durchgangskanals herausragt,
c) Aufstecken oder Aufschrauben des endseitigen Fixierteiles des zweiten Zugteiles auf das freie Ende des zweiten Zugteiles unter Aufbringung der vorgesehenen Vorspannungskraft.

Durch das Einbringen und Fixieren der Verbinder in den Durchgangskanälen kann relativ einfach und kostengünstig eine dauernde Vorspannungskraft auf die Filterkassetten aufgebracht werden. Durch die Längsverschieblichkeit der beiden Zugteile eines jeden Verbinders gibt der Verbinder bei Druckbeaufschlagung entsprechend nach, ohne verbogen oder zerstört zu werden. Die Vorspannungskraft kann bei Einspannung einer Filterkassette in einen Filterhalter problemlos durch den für eine Filtrierung notwendigen Anpressdruck überlagert werden. Bei Entfernung der Filterkassette aus dem Filterhalter wirkt dann wieder die Vorspannungskraft auf die Filterkassette ein. Die Vorspannungskraft bleibt zuverlässig erhalten, so dass die Filterkassette auch außerhalb des Filterhalters ohne dessen Anpressdruck zuverlässig abgedichtet ist.

Bei der Montage der Verbinder können die Schritte a) bis c) entsprechend der Anzahl der Verbinder wiederholt werden.

Gemäß einer bevorzugten Ausführungsform der Erfindung wird die Filterkassette zwischen zwei Spannplatten des Filterhalters eingespannt und eine die Vorspannungskraft überlagernde Anpresskraft wird auf die Abschlussplatten aufgebracht, wobei die Zugteile entsprechend den Abschlussplatten aufeinander zu geschoben werden.

Weitere Merkmale und Vorteile der Erfindung ergeben sich aus der nachfolgenden speziellen Beschreibung und den Zeichnungen.

### Kurzbeschreibung der Zeichnungen

Es zeigen:

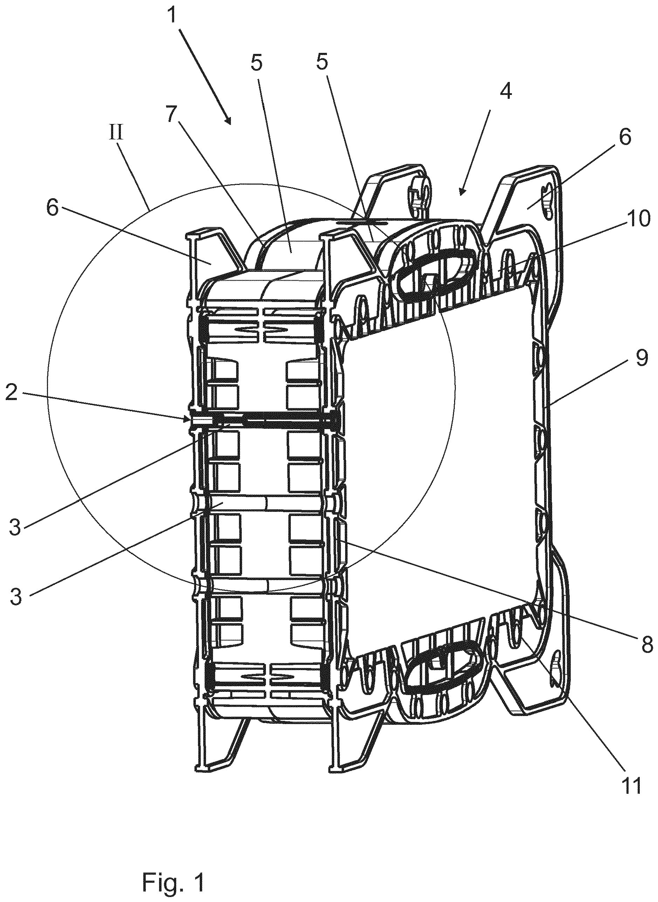

- Figur 1:: eine räumliche Darstellung einer Filterkassette mit eingesetztem Verbinder mit im Schnitt dargestelltem vorderem Seitenrand;

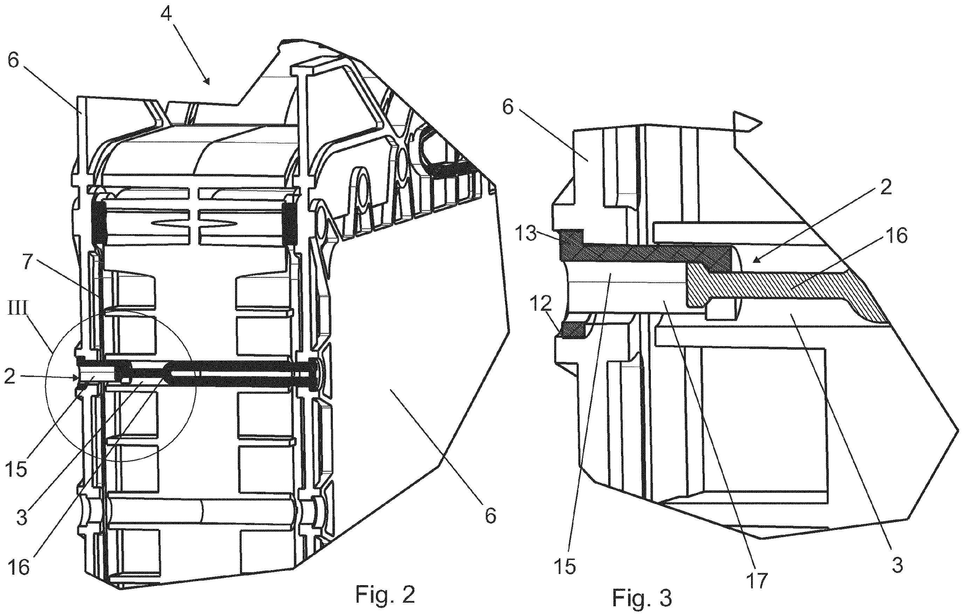

- Figur 2:: die Einzelheit II von Figur 1 in vergrößerter Darstellung;
- Figur 3:: die Einzelheit III von Figur 2 in vergrößerter Darstellung;
- Figur 4:: eine Seitenansicht des Verbinders von Figur 1 in vergrößerter Darstellung mit stimmgabelförmig ausgebildetem zweitem Zugteil;
- Figur 5:: die Einzelheit V des Verbinders von Figur 4 in vergrößerter Darstellung;
- Figur 6:: eine Seitenansicht des Verbinders von Figur 4 in einer Stellung mit überlagerter Anpresskraft;
- Figur 7:: eine vergrößere Darstellung der Einzelheit VII von Figur 6;
- Figur 8:: eine Seitenansicht in vergrößerter Darstellung eines weiteren Verbinders, bei dem das erste Zugteil zwei parallele Gabelenden aufweist, die an ihrem dem zweiten Zugteil zugewandten Ende u-förmig ineinander übergehen, wobei das zweite Zugteil entsprechend dem ersten Zugteil ausgebildet ist;
- Figur 9:: eine vergrößerte Darstellung der Einzelheit IX von Figur 8;
- Figur 10:: eine Seitenansicht des Verbinders von Figur 8 in einer Stellung mit überlagerter Anpresskraft;
- Figur 11:: eine Seitenansicht der Einzelhelt XI von Figur 10 in vergrößerter Darstellung;
- Figur 12:: eine Seitenansicht in vergrößerter Darstellung eines weiteren Verbinders, bei dem das erste Zugteil zwei parallele Gabelenden aufweist, die an ihrem dem zweiten Zugteil zugewandten Ende über ein Verbindungsteil miteinander verbunden sind;
- Figur 13:: eine vergrößerte Darstellung der Einzelheit XIII von Figur 12;
- Figur 14:: eine Seitenansicht des Verbinders von Figur 12 in einer Stellung mit überlagerter Anpresskraft;
- Figur 15:: eine vergrößerte Darstellung der Einzelheit XV von Figur 14;
- Figur 16:: eine Seitenansicht in vergrößerter Darstellung im Schnitt eines weiteren Verbinders, bei dem der erste Zugteil als eine Aufnahmebuchse und das zweite Zugteil als eine Führungsstange mit Gewinde ausgebildet ist;
- Figur 17:: eine vergrößerte Darstellung der Einzelheit XVII von Figur 16;
- Figur 18:: eine Seitenansicht des Verbinders von Figur 16 im Schnitt in einer Stellung mit überlagerter Anpresskraft;
- Figur 19:: eine vergrößerte Darstellung der Einzelheit XIX von Figur 18;
- Figur 20:: eine Seitenansicht im Schnitt eines weiteren Verbinders, bei dem das erste Zugteil als eine Aufnahmebuchse und das zweite Zugteil als eine Führungsstange ausgebildet ist, an derem freien Ende als Fixierstück eine federnde Klemmscheibe aufgesteckt ist;
- Figur 21:: eine vergrößerte Darstellung der Einzelheit XXI von Figur 20;
- Figur 22:: eine Seitenansicht des Verbinders von Figur 20 in einer Stellung mit überlagerter Anpresskraft; und
- Figur 23:: eine vergrößerte Darstellung der Einzelheit XXIII von Figur 22.

### Beschreibung bevorzugter Ausführungsformen

Ein Verbindungssystem 1 besteht im Wesentlichen aus einer Mehrzahl von Verbindern 2 in Durchgangskanälen 3 von Filterkassetten 4.

Die Filterkassette 4 besteht aus mehreren Filterschichten 5, die zwischen zwei Abschlussplatten 6 angeordnet sind. Zwischen den Filterschichten 5 und den Abschlussplatten 6 sind jeweils Dichtungen 7 angeordnet. In den Randbereichen der Abschlussplatten 6 enden jeweils die orthogonal zu den Abschlussplatten 6 verlaufenden Durchgangskanäle 3 zur Aufnahme der Verbinder 2. Die Durchgangskanäle 3 gehen in den Abschlussplatten 6 jeweils in einen Absatz 12 zur Aufnahme von endseitigen Fixierstücken 13, 14 über.

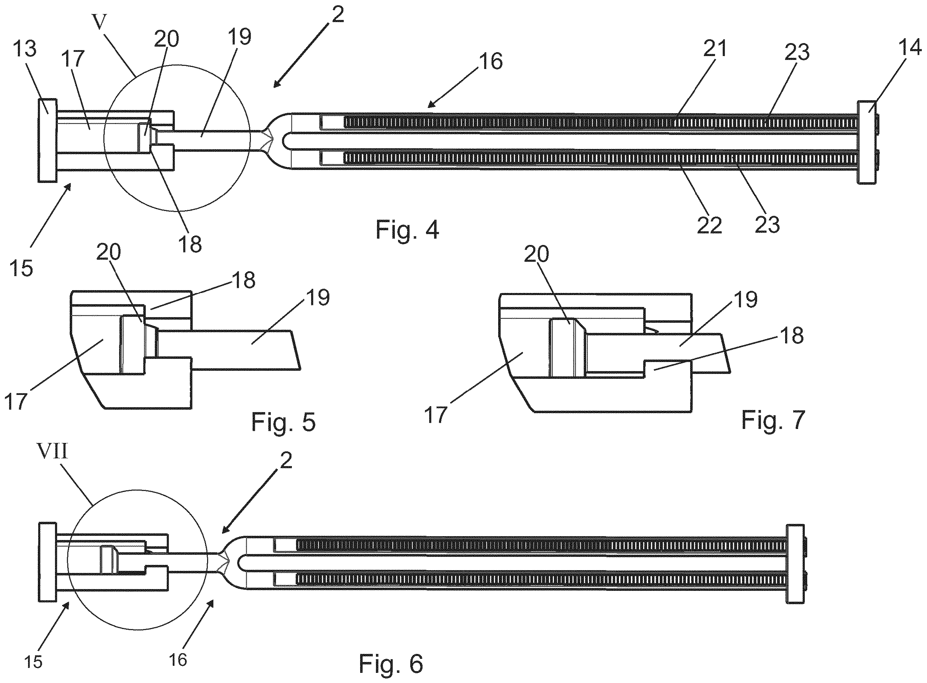

Entsprechend dem Ausführungsbeispiel der Figuren 4 bis 6 besteht der Verbinder 2 aus einem ersten Zugteil 15 und einem zweiten Zugteil 16, die längsverschieblich ineinander greifen. Das erste Zugteil 15 ist als eine seitlich geöffnete Aufnahmebuchse 17 ausgebildet. Die Aufnahmebuchse 17 weist an ihrem dem zweiten Zugteil 16 zugewandten Ende eine einen Anschlag 18 bildende Verengung auf. An ihrem dem zweiten Zugteil 16 abgewandten Ende weist die Aufnahmebuchse 17 das erste Fixierstück 13, mit dem sie in den Absatz 12 des Durchgangkanales 3 der Abschlussplatte 6 einsetzbar ist, auf.

Das zweite Zugteil 16 des Verbinders 2 ist stimmgabelförmig ausgebildet und weist eine Griffstange 19 auf, an deren dem ersten Zugteil 15 zugewandten freien Ende ein Anschlag 20 angeordnet ist. Die Griffstange 19 ist mit ihrem freien Ende seitlich in die Aufnahmebuchse 17 des ersten Zugteiles 15 einsetzbar, so dass in einer Maximalstellung, in der eine Vorspannungskraft auf die Abschlussplatten 6 aufbringbar ist, der Anschlag 20 der Griffstange 19 gegen den Anschlag 18 der Aufnahmebuchse 17 anschlagbar ist. Die Griffstange 19 geht an ihrem dem ersten Zugteil 15 abgewandten Ende in zwei parallele Gabelenden 21, 22 über. Die Gabelenden 21, 22 weisen seitlich angeordnete Rastzähne 23 auf. Das Fixierstück 14 ist als eine Klemmscheibe ausgebildet, die auf die Gabelenden 21, 22 abgestimmte, nicht weiter dargestellte Rastöffnungen mit Rastzungen aufweist und die auf die Gabelenden 21, 22 verrastend aufsteckbar ist und in den Absatz 12 des Durchgangkanales 3 der Abschlussplatte 6 eingreift.

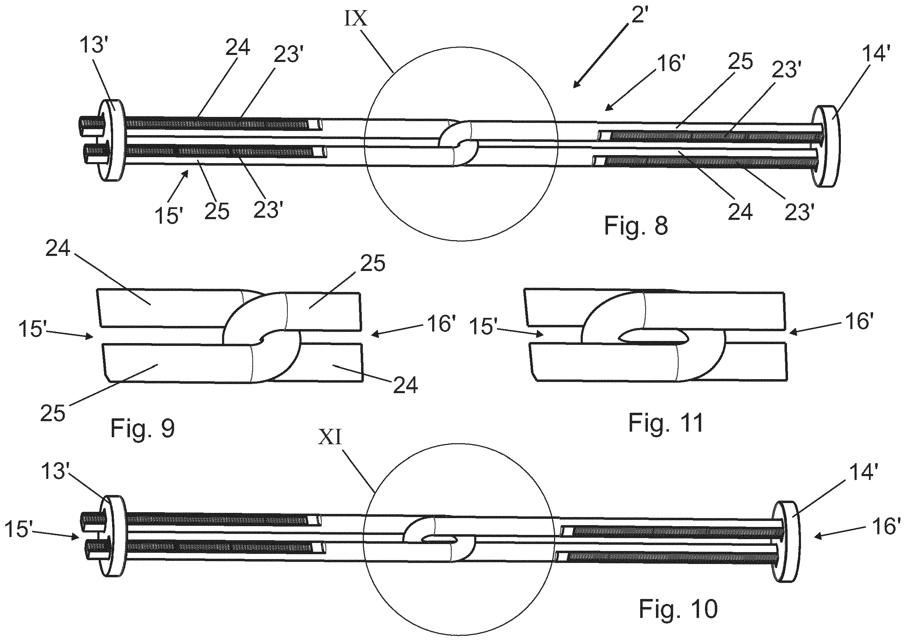

Entsprechend dem Ausführungsbeispiel der Figuren 8 bis 11 weist das erste Zugteil 15' des Verbinders 2' zwei parallele Gabelenden 24, 25 auf, die an ihrem zweiten Zugteil 16' zugewandten Ende u-förmig in einander übergehen, wobei die Gabelenden 24, 25 seitlich angeordnete Rastzähne 23' aufweisen. Auf die Gabelenden 24, 25 ist das Fixierstück 13', das dem Fixierstück 14 entspricht und ebenfalls nicht dargestellte auf die Gabelenden 24, 25 abgestimmte Rastöffnungen mit Rastzungen aufweist, verrastend aufsteckbar. Das zweite Zugteil 16' des Verbinders 2' mit seinem Fixierstück 14' ist entsprechend dem ersten Zugteil 15' ausgebildet. Das erste Zugteil 15' und das zweite Zugteil 16' greifen mit ihren einander zugewandten u-förmigen Enden kettengliedartig ineinander.

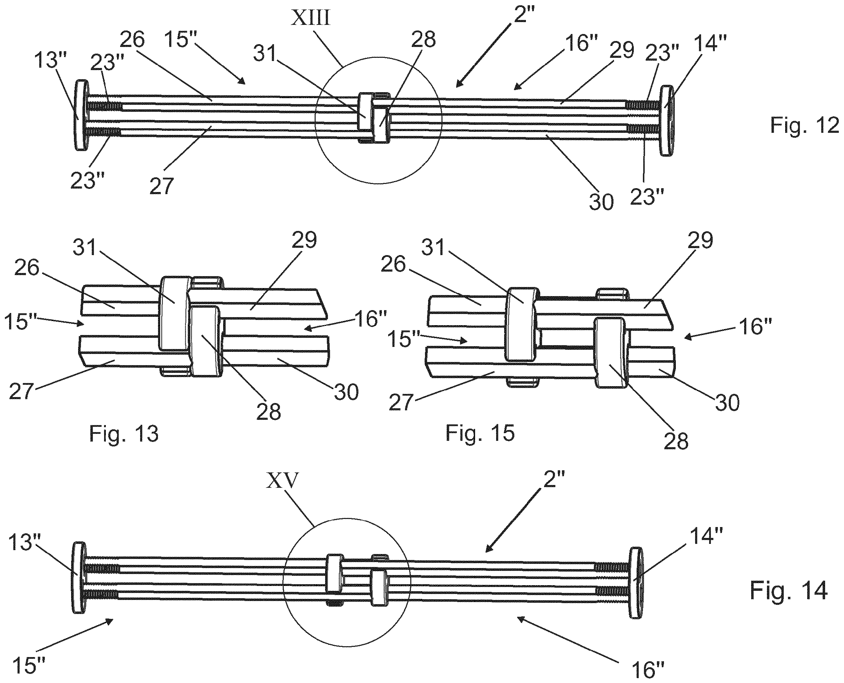

Entsprechend dem Ausführungsbeispiel der Figuren 12 bis 15 weist das erste Zugteil 15" des Verbinders 2" zwei parallele Führungsstangen 26, 27 auf, die an ihrem dem zweiten Zugteil 16" zugewandten Ende über ein Verbindungsteil 28 miteinander verbunden sind. Die Führungsstangen 26, 27 weisen seitlich angeordnete Rastzähne 23" auf und sind gleich ausgebildet. Ein als Klemmscheibe ausgebildetes Fixierstück 13" mit auf die Führungsstangen 26, 27 gesteckten nicht dargestellten Rastöffnungen mit Rastzungen ist verrastend auf die Führungsstangen 26, 27 aufsteckbar.

Das zweite Zugteil 16" weist entsprechend dem ersten Zugteil 15" ebenfalls parallele Führungsstangen 29, 30 auf, die den Führungsstangen 26, 27 entsprechen und über ein Verbindungsteil 31, das dem Verbindungsteil 28 entspricht, miteinander verbunden sind. Das Fixierstück 14" entspricht somit dem Fixierstück 13" des ersten Zugteiles 15".

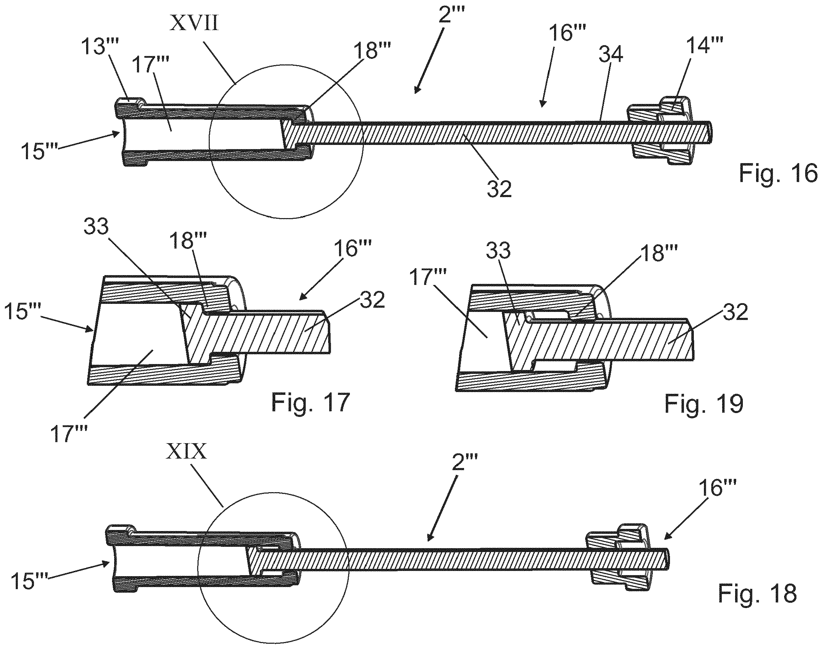

Entsprechend dem Ausführungsbeispiel der Figuren 16 bis 19 ist das erste Zugteil 15''' des Verbinders 2''' als eine Aufnahmebuchse 17''' ausgebildet, die an ihrem dem zweiten Zuteil 16''' zugewandten Ende eine einen Anschlag 18''' bildende Verengung aufweist und die an ihrem dem zweiten Zugteil 16''' abgewandten Ende in ein ringförmiges Fixierstück 13''' übergeht. Das zweite Zugteil 16''' ist als eine Führungsstange 32 ausgebildet, an derem dem ersten Zugteil 15''' zugewandten Ende ein Anschlag 33 angeordnet ist, wobei das zweite Zugteil 16''' in das erste Zugteil 15''' einsteckbar ist, wobei der Anschlag 33 des zweiten Zugteiles 16''' an den von der Verengung des ersten Zugteils 15''' gebildeten Anschlag 18''' anschlagbar ist. Die Führungsstange 32 des zweiten Zugteiles 16''' weist an ihrem dem ersten Zugteil 15''' abgewandten Ende ein Gewinde 34 auf. Das Fixierstück 14''' des zweiten Zugteiles 16''' ist als eine auf das gewindeseitige Ende der Führungsstange 32 aufschraubbare Gewindehülse ausgebildet.

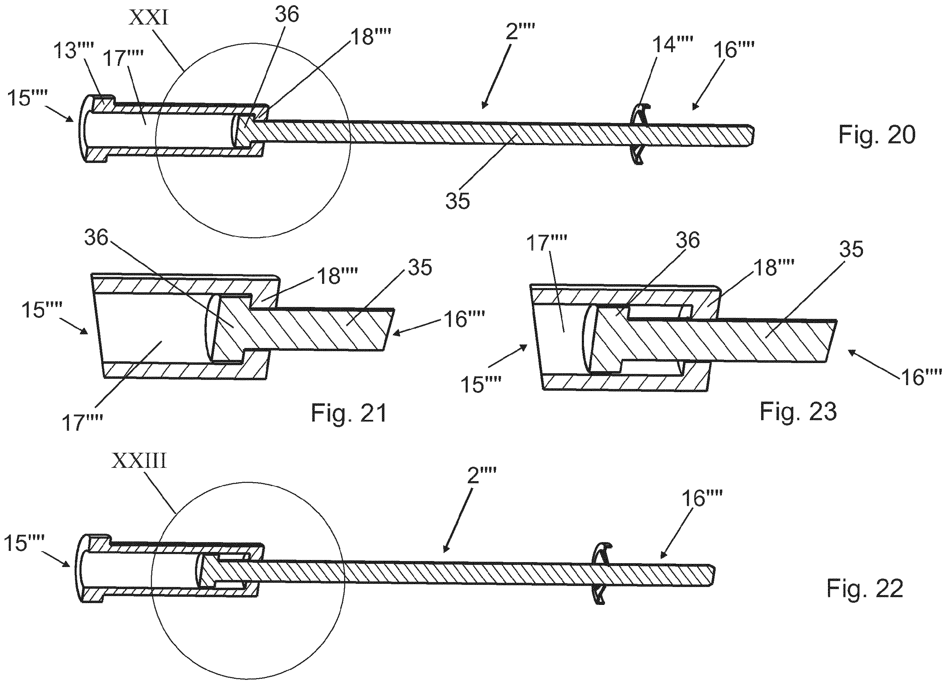

Entsprechend dem Ausführungsbeispiel der Figuren 20 bis 23 besteht der Verbinder 2"" aus einem ersten Zugteile 15"", das als eine Aufnahmebuchse 17"" mit einem Anschlag 18"" und einem Fixierstück 13"" ausgebildet ist. Das zweite Zugteil 16"" ist als eine Führungsstange 35 ausgebildet, die an ihrem dem ersten Zugteil 15"" zugewandten Ende einen Anschlag 36 aufweist, der an den von der Verengung des ersten Zugteils 15"" gebildeten Anschlag 18"" anschlagbar ist. Auf das dem ersten Zugteil 15"" abgewandte freie Ende der Führungsstange 35 ist eine als Fixierstück 14"" ausgebildete, federnde Klemmscheibe aufsteckbar. Durch die federnde, gewölbte Ausbildung des Fixierstückes 14"" ist die Klemmscheibe nur in eine Richtung, nämlich zu dem ersten Zugteil 15"" hin, verschiebbar.

Zum Aufbringen einer Vorspannungskraft auf eine einen nicht dargestellten Filterhalter (siehe zum Beispiel Firmenprospekt "SARTOFLOW® 10 Stainless Steel Holder") einsetzbare Filterkassette 4 wird zunächst der Verbinder 2, 2', 2", 2''', 2"", durch Ineinanderstecken seiner längsverschieblich ineinander greifenden Zugteile 15, 16; 15', 16'; 15", 16"; 15''', 16'''; 15"", 16"" teilmontiert.

Nach dem Einstecken des Verbinders 2, 2', 2", 2''', 2"" in seinen zugehörigen Durchgangskanal wird das erste Zugteil 15, 15', 15", 15''', 15"" mit seinem endseitigen Fixierstück 13, 13', 13", 13''', 13"" in den ersten Absatz 12 des Durchgangskanals 3 eingesetzt. Anschließend erfolgt das Aufstecken oder Aufschrauben des endseitigen Fixierstückes 14, 14', 14", 14''', 14"" des zweiten Zugteiles 16, 16', 16", 16''', 16"" auf das freie Ende des zweiten Zugteiles unter Aufbringung der vorgesehenen Vorspannungskraft.
Natürlich stellen die in der speziellen Beschreibung diskutierten und in den Figuren gezeigten Ausführungsformen nur illustrative Ausführungsbeispiele der vorliegenden Erfindung dar.

### Bezugszeichenliste

- 1: Verbindungssystem
- 2, 2', 2", 2''', 2"": Verbinder
- 3: Durchgangskanal von 4
- 4: Filterkassette
- 5: Filterschicht
- 6: Abschlussplatte
- 7: Dichtung
- 8: Randbereich von 6
- 9: Randbereich von 6
- 10: Randbereich von 6
- 11: Randbereich von 6
- 12: Absatz von 3
- 13, 13', 13", 13''', 13"": Fixierstück
- 14, 14', 14", 14''', 14"": Fixierstück
- 15, 15', 15", 15''', 15"": erstes Zugteil
- 16, 16', 16", 16''', 16"": zweites Zugteil
- 17, 17''': Aufnahmebuchse
- 18, 18''', 18"": Anschlag
- 19: Griffstange von 16
- 20: Anschlag von 19
- 21: Gabelende
- 22: Gabelende
- 23, 23', 23": Rastzahn
- 24: Gabelende
- 25: Gabelende
- 26: Führungsstange von 15"
- 27: Führungsstange von 15"
- 28: Verbindungsteil von 15"
- 29: Führungsstange von 16"
- 30: Führungsstange von 16"
- 31: Verbindungsteil von 16"
- 32: Führungsstange von 16'''
- 33: Anschlag von 32
- 34: Gewinde von 32
- 35: Führungsstange von 16""
- 36: Anschlag

## Patentansprüche

1. Filterkassette (4) mit einem Verbindungssystem (1) mit mindestens einem Verbinder (2, 2', 2", 2''', 2"") für eine in einen Filterhalter einsetzbare Filterkassette (4) mit einer oder mehreren zwischen zwei Abschlussplatten (6) angeordneten Filterschichten (5) und zwischen den Filterschichten (5) und/oder zwischen den Abschlussplatten (6) und jeweils benachbarter Filterschicht (5) angeordneten Dichtungen (7),
**dadurch gekennzeichnet,**
**dass** der Verbinder (2, 2', 2", 2''', 2"") zwei längsverschieblich ineinandergreifende Zugteile (15, 16, 15', 16', 15", 16", 15''', 16''', 15"", 16"") aufweist, die mit ihren voneinander abgewandten Enden an den Abschlussplatten (6) fixierbar sind,
**dass** durch die Längsverschieblichkeit der beiden Zugteile (15, 16, 15', 16', 15", 16", 15''', 16''', 15"",16"") eines jeden Verbinders (2, 2', 2", 2''', 2"") der Verbinder (2, 2', 2", 2''', 2"") bei Druckbeaufschlagung entsprechend nachgibt ohne verbogen oder zerstört zu werden,
**dass** der Verbinder (2, 2', 2", 2''', 2"") bei seiner maximalen Auslenkung eine Vorspannungskraft auf die Abschlussplatten (6) ausübt, die die Abschlussplatten (6) gegen die Filterschichten (5) zieht, und
**dass** bei Aufbringen einer die Vorspannungskraft überlagernden Anpresskraft auf die Abschlussplatten (6) die Zugteile (15, 16, 15', 16', 15", 16", 15''', 16''', 15"", 16"") entsprechend den Abschlussplatten (6) aufeinander zuschiebbar sind,
**dass** die Filterkassette (4) mindestens einen Durchgangskanal (3) zur Aufnahme des mindestens einen Verbinders (2, 2', 2", 2''', 2"") aufweist,
**dass** der Durchgangskanal (3) in den Abschlussplatten (6) jeweils in einen Absatz (12) zur Aufnahme von endseitigen Fixierstücken (13, 13', 13", 13"', 13"", 14, 14', 14", 14''', 14"") des Verbinders (2, 2', 2", 2''', 2"") übergeht,
**dass** das erste Zugteil (15, 15', 15", 15''', 15"") mit seinem endseitigen Fixierstück (13, 13', 13", 13''', 13"") in den ersten Absatz (12) des Durchgangskanales (3) in der ersten Abschlussplatte (6) einsetzbar ist, und
**dass** das endseitige Fixierstück (14, 14', 14", 14''', 14"") des zweiten Zugteiles (16, 16', 16", 16"", 16"") auf das freie Ende des zweiten Zugteiles (16, 16', 16", 16''', 16"") unter Aufbringung der vorgesehenen Vorspannungskraft aufsteckbar oder aufschraubbar ist.

2. Filterkassette (4) mit Verbindungssystem nach Anspruch 1,
**dadurch gekennzeichnet,**
**dass** das erste Zugteil (15) als eine seitlich geöffnete Aufnahmebuchse (17) ausgebildet ist, die an ihrem dem zweiten Zugteil (16) zugewandten Ende eine einen Anschlag (18) bildende Verengung aufweist und die an ihrem dem zweiten Zugteil (16) abgewandten Ende in ein scheibenförmiges Fixierstück (13) übergeht.

3. Filterkassette (4) mit Verbindungssystem nach Anspruch 2,
**dadurch gekennzeichnet,**
**dass** das zweite Zugteil (16) stimmgabelförmig ausgebildet ist und eine Griffstange (19) aufweist, an deren dem ersten Zugteil (15) zugewandten freien Ende ein Anschlag (20) angeordnet ist,
**dass** das freie Ende seitlich in die Aufnahmebuchse (17) des ersten Zugteiles (15) einsetzbar ist,
**dass** die Griffstange (19) an ihrem dem ersten Zugteil (15) abgewandten Ende in zwei parallele Gabelenden (21, 22,) übergeht,
**dass** die Gabelenden (21, 22,) seitlich angeordnete Rastzähne (23) aufweisen, und dass ein als Klemmscheibe ausgebildetes Fixierstück (14) mit auf die Gabelenden (21, 22) abgestimmten Rastöffnungen mit Rastzungen verrastend auf die Gabelenden (21, 22) aufsteckbar ist.

4. Filterkassette (4) mit Verbindungssystem nach Anspruch 1,
**dadurch gekennzeichnet,**
**dass** das erste Zugteil (15') zwei parallele Gabelenden (24, 25) aufweist, die an ihrem dem zweiten Zugteil (16') zugewandten Ende U-förmig in einander übergehen,
**dass** die Gabelenden (24, 25) seitlich angeordnete Rastzähne (23') aufweisen, und dass ein als Klemmscheibe ausgebildetes Fixierstück (13') mit auf die Gabelenden (24, 25) abgestimmten Rastöffnungen mit Rastzungen verrastend auf die Gabelenden (24, 25) aufsteckbar ist.

5. Filterkassette (4) mit Verbindungssystem nach Anspruch 4,
**dadurch gekennzeichnet,**
**dass** das zweite Zugteil (16') zwei parallele Gabelenden (24, 25) aufweist, die an ihrem dem ersten Zugteil (15') zugewandten Ende U-förmig in einander übergehen, dass die Gabelenden (24, 25) seitlich angeordnete Rastzähne (23') aufweisen, dass ein als Klemmscheibe ausgebildetes Fixierstück (14') mit auf die Gabelenden (24, 25) abgestimmten Rastöffnungen mit Rastzungen verrastend auf die Gabelenden (24, 25) aufsteckbar ist, und
**dass** das erste Zugteil (15') und das zweite Zugteil (16') mit ihren einander zugewandten U-förmigen Enden kettengliedartig ineinandergreifen.

6. Filterkassette (4) mit Verbindungssystem nach Anspruch 1,
**dadurch gekennzeichnet,**
**dass** das erste Zugteil (15") zwei parallele Führungsstangen (26, 27) aufweist, die an ihrem dem zweiten Zugteil (16") zugewandten Ende über ein Verbindungsteil (28) miteinander verbunden sind,
**dass** die Führungsstangen (26, 27) seitlich angeordnete Rastzähne (23") aufweisen, und
**dass** ein als Klemmscheibe ausgebildetes Fixierstück (13") mit auf die Führungsstangen (26, 27) abgestimmten Rastöffnungen mit Rastzungen verrastend auf die Führungsstangen (26, 27) aufsteckbar ist.

7. Filterkassette (4) mit Verbindungssystem nach Anspruch 6,
**dadurch gekennzeichnet,**
**dass** das zweite Zugteil (16") zwei parallele Führungsstangen (29, 30) aufweist, die an ihrem dem ersten Zugteil (15") zugewandten Ende über ein Verbindungsteil (31) miteinander verbunden sind,
**dass** die Führungsstangen (29, 30) seitlich angeordnete Rastzähne (23") aufweisen, dass ein als Klemmscheibe ausgebildetes Fixierstück (14") mit auf die Führungsstangen (29, 30) abgestimmten Rastöffnungen mit Rastzungen verrastend auf die Führungsstangen (29, 30) aufsteckbar ist, und
**dass** das erste Zugteil (15") und das zweite Zugteil (16") mit ihren einander zugewandten Enden ineinandergreifen.

8. Filterkassette (4) mit Verbindungssystem nach Anspruch 1,
**dadurch gekennzeichnet,**
**dass** das erste Zugteil (15"', 15"") als eine Aufnahmebuchse (17''', 17"") ausgebildet ist, die an ihrem dem zweiten Zugteil (16''', 16"") zugewandten Ende eine einen Anschlag (18''', 18"") bildende Verengung aufweist und die an ihrem dem zweiten Zugteil (16''', 16"") abgewandten Ende in ein ringförmiges Fixierstück (13''', 13"") übergeht.

9. Filterkassette (4) mit Verbindungssystem nach Anspruch 8,
**dadurch gekennzeichnet,**
**dass** das zweite Zugteil (16''') als eine Führungsstange (32) ausgebildet ist an deren dem ersten Zugteil (15''') zugewandten Ende ein Anschlag (33) angeordnet ist, dass an dem dem Anschlag (33) abgewandten Ende die Führungsstange (32) ein Gewinde (34) aufweist,
**dass** das zweite Zugteil (16"") in das erste Zugteil (15''') einsteckbar ist,
**dass** der Anschlag (33) des zweiten Zugteils (16''') an den von der Verengung des ersten Zugteils (15''') gebildeten Anschlag (18''') anschlagbar ist, und
**dass** auf das gewindeseitige Ende der Führungsstange (32) eine als Fixierstück (14''') ausgebildete Gewindehülse aufschraubbar ist.

10. Filterkassette (4) mit Verbindungssystem nach Anspruch 8,
**dadurch gekennzeichnet,**
**dass** das zweite Zugteil (16"") als eine Führungsstange (35) ausgebildet ist an deren dem ersten Zugteil (15"") zugewandten Ende ein Anschlag (36) angeordnet ist,
**dass** das zweite Zugteil (16"") in das erste Zugteil (15"") einsteckbar ist,
**dass** der Anschlag (36) des zweiten Zugteils(16"") an den von der Verengung des ersten Zugteils (15"") gebildeten Anschlag (18"") anschlagbar ist, und
**dass** auf das freie Ende der Führungsstange (35) eine als Fixierstück (14"") ausgebildete federnde Klemmscheibe aufsteckbar ist.

11. Filterkassette (4) mit Verbindungssystem nach einem der Ansprüche 1 bis 10, **dadurch gekennzeichnet,**
**dass** die Filterkassette (4) in den Randbereichen der Abschlussplatten (6) eine Mehrzahl von orthogonal zu den Abschlussplatten (6) verlaufenden Durchgangskanälen (3) zur Aufnahme jeweils eines Verbinders (2, 2', 2", 2''', 2"") aufweist.

12. Verfahren zum Aufbringen einer Vorspannungskraft auf eine in einen Filterhalter einsetzbare Filterkassette (4) mit einem Verbindungssystem nach einem der Ansprüche 1 bis 11,
**dadurch gekennzeichnet,**
**dass** folgende Schritte durchgeführt werden:
a) Teilmontage eines Verbinders (2, 2', 2", 2''', 2"") durch Ineinanderstecken zweier längsverschieblich ineinandergreifender Zugteile (15, 16, 15', 16', 15", 16", 15''', 16''', 15"", 16""),
b) Einstecken des Verbinders (2, 2', 2", 2''', 2"") in einen orthogonal zu den Abschlussplatten (6) der Filterkassette (4) angeordneten Durchgangskanal (3), wobei das erste Zugteil (15, 15', 15", 15''', 15"") mit seinem endseitigen Fixierstück (13, 13', 13", 13''', 13"") in einen ersten Absatz (12) des Durchgangskanales (3) in der ersten Abschlussplatte (6) eingesetzt wird und wobei das zweite Zugteil (16, 16', 16", 16''', 16"") mit seinem freien Ende aus dem in der zweiten Abschlussplatte (6) angeordneten zweiten Absatz (12) des Durchgangskanals (3) herausragt,
c) Aufstecken oder Aufschrauben des endseitigen Fixierstückes (14, 14', 14", 14''', 14"") des zweiten Zugteiles (16, 16', 16", 16"', 16"") auf das freie Ende des zweiten Zugteiles (16, 16', 16", 16''', 16"") unter Aufbringung der vorgesehenen Vorspannungskraft.

13. Verfahren nach Anspruch 12,
**dadurch gekennzeichnet,**
**dass** die Schritte a) bis c) mit weiteren Verbindern (2, 2', 2", 2''', 2"") wiederholt werden.

14. Verfahren nach Anspruch 12 oder 13,
**dadurch gekennzeichnet,**
**dass** die Filterkassette (4) zwischen zwei Spannplatten des Filterhalters eingespannt und eine die Vorspannungskraft überlagernde Anpresskraft auf die Abschlussplatten (6) aufgebracht wird, wobei die Zugteile (15, 16, 15', 16', 15", 16", 15''', 16''', 15"", 16"") entsprechend den Abschlussplatten (6) aufeinander zu geschoben werden.

## Claims

1. A filter cassette (4) with a connecting system (1) having at least one connector (2, 2', 2", 2''', 2"") for a filter cassette (4) which can be inserted into a filter holder, and having one or more filter layers (5) which are arranged between two end plates (6), and having seals (7) which are arranged between the filter layers (5) and/or between the end plates (6) and a respectively adjacent filter layer (5),
**characterized in that**
the connector (2, 2', 2", 2"', 2"") has two tensioning parts (15, 16, 15', 16', 15", 16", 15''', 16''', 15"", 16"") which engage in one another in a longitudinally displaceable manner and can be fixed to the end plates (6) by their ends which are facing away from one another,
the longitudinal displaceability of the two tensioning parts (15, 16, 15', 16', 15", 16", 15''', 16''', 15"", 16"") of each connector (2, 2', 2", 2''', 2"") allows the connector (2, 2', 2", 2''', 2"") to give way appropriately when pressure is applied, without being bent or destroyed,
the connector (2, 2', 2", 2''', 2"") exerts a pretensioning force onto the end plates (6) when it is deflected to its maximum extent, said pretensioning force pulling the end plates (6) towards the filter layers (5), and
when a contact-pressure force which is superimposed on the pretensioning force is applied to the end plates (6), the tensioning parts (15, 16, 15', 16', 15", 16", 15''', 16''', 15"", 16"") can be pushed towards one another in a manner corresponding with the end plates (6),
the filter cassette (4) has at least one through-channel (3) for accommodating the at least one connector (2, 2', 2", 2''', 2""),
in the end plates (6) each hollow channel (3) transitions into an offset (12) to accommodate the end-positioned fasteners (13, 13', 13", 13''', 13"", 14, 14', 14", 14''', 14"") of the connector (2, 2', 2", 2''', 2""),
the end-positioned fastener (13, 13', 13", 13"', 13"") of the first tensioning part (15, 15', 15", 15''', 15"") can be inserted into a first offset (12) of the through-channel (3) in the first end plate (6), and
**in that** the end-positioned fastener (14, 14', 14", 14''', 14"") of the second tensioning part (16, 16', 16", 16''', 16"") can be fitted or screwed onto the free end of the second tensioning part (16, 16', 16", 16''', 16"") while applying the desired pretensioning force.

2. The filter cassette (4) with a connecting system according to Claim 1,
**characterized in that**
the first tensioning part (15) is designed as a receiving bushing (17) with a lateral opening, whose end facing the second tensioning part (16) has a constriction forming a stop (18) and whose end facing away from the second tensioning part (16) transitions into a disc-shaped fastener (13).

3. The filter cassette (4) with a connecting system according to Claim 2,
**characterized in that**
the second tensioning part (16) is designed in the shape of a tuning fork and has a gripping rod (19) with a stop (20) arranged on its free end facing the first tensioning part (15),
the free end can be inserted laterally into the receiving bushing (17) of the first tensioning part (15),
the end of the gripping rod (19) faces away from the first tensioning part (15) transitions into two parallel fork ends (21, 22),
the fork ends (21, 22) have laterally arranged latching teeth (23), and
**in that** a fastener (14) designed as a lock washer having latching openings matched to the fork ends (21, 22) can be fitted and latched onto the fork ends (21, 22) with latching tongues.

4. The filter cassette (4) with a connecting system according to Claim 1,
**characterized in that**
the first tensioning part (15') has two parallel fork ends (24, 25) which at the end facing the second tensioning part (16') transition into one another in a U-shape, the fork ends (24, 25) have laterally arranged latching teeth (23'), and
**in that** a fastener (13') designed as a lock washer having latching openings matched to the fork ends (24, 25) can be fitted and latched onto the fork ends (24, 25) with latching tongues.

5. The filter cassette (4) with a connecting system according to Claim 4,
**characterized in that**
the second tensioning part (16') also has two parallel fork ends (24, 25) which at the end facing the first tensioning part (15') transition into one another in a U-shape, the fork ends (24, 25) have laterally arranged latching teeth (23'),
a fastener (14') designed as a lock washer having latching openings matched to the fork ends (24, 25) can be fitted and latched onto the fork ends (24, 25) with latching tongues, and
**in that** the U-shaped facing ends of the first tensioning part (15') and of the second tensioning part (16') engage in one another in the manner of chain links.

6. The filter cassette (4) with a connecting system according to Claim 1,
**characterized in that**
the first tensioning part (15") has two parallel guide rods (26, 27) which at the end facing the second tensioning part (16") are connected to one another by means of a connector part (28),
the guide rods (26, 27) have laterally arranged latching teeth (23"), and
**in that** a fastener (13") designed as a lock washer having latching openings matched to the guide rods (26, 27) can be fitted and latched onto the guide rods (26, 27) with latching tongues.

7. The filter cassette (4) with a connecting system according to Claim 6,
**characterized in that**
the second tensioning part (16") has two parallel guide rods (29, 30) which at the end facing the first tensioning part (15') are connected to one another by means of a connector part (31),
the guide rods (29, 30) have laterally arranged latching teeth (23"),
a fastener (14") designed as a lock washer having latching openings that are matched to the guide rods (29, 30) can be fitted and latched onto the guide rods (29, 30) with latching tongues, and
**in that** the facing ends of the first tensioning part (15") and of the second tensioning part (16") engage in one another.

8. The filter cassette (4) with a connecting system according to Claim 1,
**characterized in that**
the first tensioning part (15"', 15"") is designed as a receiving bushing (17''', 17"") whose end facing the second tensioning part (16''', 16"") has a constriction forming a stop (18''', 18"") and whose end facing away from the second tensioning part (16''', 16"") transitions into a ring-shaped fastener (13"', 13"").

9. The filter cassette (4) with a connecting system according to Claim 8,
**characterized in that**
the second tensioning part (16''') is designed as a guide rod (32) on whose end facing the first tensioning part (15''') a stop (33) is arranged,
the end of the guide rod (32) facing away from the stop (33) has a thread (34), the second tensioning part (16''') can be inserted into the first tensioning part (15'''), the stop (33) of the second tensioning part (16''') can abut the stop (18''') formed by the constriction in the first tensioning part (15'''), and
**in that** a threaded sleeve designed as a fastener (14''') can be screwed onto the threaded end of the guide rod (32).

10. The filter cassette (4) with a connecting system according to Claim 8,
**characterized in that**
the second tensioning part (16"") is designed as a guide rod (35) on whose end facing the first tensioning part (15"") a stop (36) is arranged,
the second tensioning part (16"") can be inserted into the first tensioning part (15""), the stop (36) of the second tensioning part (16"") can be abutted against the stop (18"") formed by the constriction in the first tensioning part (15""), and
**in that** a spring lock washer designed as a fastener (14"") can be fitted onto the free end of the guide rod (35).

11. The filter cassette (4) with a connecting system according to any of Claims 1 to 10,
**characterized in that**
in the edge areas of the end plates (6), the filter cassette (4) has a plurality of through-channels (3) running orthogonally relative to the end plates (6), each for accommodating one connector (2, 2', 2", 2"', 2"").

12. A method for applying a pretensioning force to a filter cassette (4) which can be inserted into a filter holder having a connecting system according to any of Claims 1 to 11,
**characterized in that**
the following steps are performed:
a) Partial installation of a connector (2, 2', 2", 2"', 2"") by inserting into one another two tensioning parts (15, 16, 15', 16', 15", 16", 15''', 16''', 15"", 16"") that engage in one another in a longitudinally displaceable manner,
b) Inserting the connector (2, 2', 2", 2''', 2"") into a through-channel arranged orthogonally relative to the end plates (6) of the filter cassette (4), wherein the end-positioned fastener (13, 13', 13", 13''', 13"") of the first tensioning part (15, 15', 15", 15''', 15"") is inserted into a first offset (12) of the through-channel (3) in the first end plate (6) and wherein the free end of the second tensioning part (16, 16', 16", 16''', 16"") projects from the second offset (12) of the through channel (3) arranged in the second end plate (6),
c) Fitting or screwing the end-positioned fastener (14, 14', 14", 14''', 14"") of the second tensioning part (16, 16', 16", 16''', 16"") onto the free end of the second tensioning part (16, 16', 16", 16''', 16"") while applying the desired pretensioning force.

13. The method according to Claim 12,
**characterized in that**
the steps a) to c) are repeated with additional connectors (2, 2', 2", 2''', 2"").

14. The method according to Claim 12 or 13,
**characterized in that**
the filter cassette (4) is inserted between two clamping plates of the filter holder and a contact-pressure force is superimposed on the pretensioning force is applied to the end plates (6), wherein the tensioning parts (15, 16, 15', 16', 15", 16", 15''', 16''', 15"", 16"") are pushed toward one another in a manner corresponding with the end plates (6).

## Revendications

1. Cassette de filtre (4) avec un système de liaison (1) comprenant au moins un connecteur (2, 2', 2", 2''', 2"") pour une cassette de filtre (4) pouvant être insérée dans un porte-filtre et dotée d'une ou plusieurs couches de filtre (5) disposées entre deux plaques terminales (6) et de joints d'étanchéité (7) disposés entre les couches de filtre (5) et/ou entre les plaques terminales (6) et la couche de filtre (5) respectivement voisine,
**caractérisée en ce que** le connecteur (2, 2', 2", 2"', 2"") présente deux éléments de traction (15, 16, 15', 16', 15", 16", 15''', 16"', 15"", 16"") s'engageant l'un dans l'autre de manière à pouvoir être déplacés longitudinalement, qui peuvent être fixés aux plaques terminales (6) par leurs extrémités mutuellement opposées,
**en ce que**, par la faculté de déplacement longitudinal des deux éléments de traction (15, 16, 15', 16', 15", 16", 15''', 16''', 15"", 16"") de chaque connecteur (2, 2', 2", 2''', 2""), le connecteur (2, 2', 2", 2''', 2"") fléchit d'une manière correspondante lorsqu'il est sollicité en pression, sans être déformé ou détruit,
**en ce que** le connecteur (2, 2', 2", 2''', 2"") exerce à sa déviation maximale une force de précontrainte sur les plaques terminales (6) qui tire les plaques terminales (6) contre les couches de filtre (5),
et **en ce que**, lorsqu'une force de pression d'application se superposant à la force de précontrainte est exercée sur les plaques terminales (6), les éléments de traction (15, 16, 15', 16', 15", 16", 15"', 16"', 15"",16"") peuvent être poussés l'un vers l'autre d'une manière correspondante aux plaques terminales (6),
**en ce que** la cassette de filtre (4) présente au moins un canal de passage (3) destiné à recevoir le connecteur au moins unique (2, 2', 2", 2"', 2""),
**en ce que** le canal de passage (3) se poursuit respectivement dans les plaques terminales (6) par un gradin (12) destiné à recevoir des pièces de fixation terminales (13, 13', 13", 13"', 13"", 14, 14', 14", 14''', 14"") du connecteur (2, 2', 2", 2''', 2""), **en ce que** le premier élément de traction (15, 15', 15", 15''', 15"") peut être inséré par sa pièce de fixation terminale (13, 13', 13", 13''', 13"") dans le premier gradin (12) du canal de passage (3) dans la première plaque terminale (6),
et **en ce que** la pièce de fixation terminale (14, 14', 14", 14''', 14"") du deuxième élément de traction (16, 16', 16", 16''', 16"") peut être emmanchée ou vissée sur l'extrémité libre du deuxième élément de traction (16, 16', 16", 16''', 16"") en exerçant la force de précontrainte prévue.

2. Cassette de filtre (4) avec système de liaison selon la revendication 1, **caractérisée en ce que** le premier élément de traction (15) est réalisé sous la forme d'une douille réceptrice (17) ouverte latéralement, qui présente à son extrémité tournée vers le deuxième élément de traction (16) un rétrécissement formant une butée (18) et qui se poursuit, à son extrémité opposée au deuxième élément de traction (16), par une pièce de fixation (13) en forme de disque.

3. Cassette de filtre (4) avec système de liaison selon la revendication 2, **caractérisée en ce que** le deuxième élément de traction (16) est réalisé en forme de diapason et présente une tige de préhension (19) à l'extrémité libre de laquelle, tournée vers le premier élément de traction (15), est disposée une butée (20),
**en ce que** l'extrémité libre peut être insérée latéralement dans la douille réceptrice (17) du premier élément de traction (15),
**en ce que** la tige de préhension (19) se poursuit, à son extrémité opposée au premier élément de traction (15), par deux extrémités de fourche parallèles (21, 22), **en ce que** les extrémités de fourche (21, 22) présentent des dents d'enclenchement (23) disposées latéralement,
et **en ce qu'**une pièce de fixation (14) réalisée sous forme de disque de serrage peut être emmanchée avec enclenchement sur les extrémités de fourche (21, 22) par des ouvertures d'enclenchement adaptées aux extrémités de fourche (21, 22) et dotées de languettes d'enclenchement.

4. Cassette de filtre (4) avec système de liaison selon la revendication 1, **caractérisée en ce que** le premier élément de traction (15') présente deux extrémités de fourche parallèles (24, 25), qui se raccordent l'une à l'autre en forme de U à leur extrémité tournée vers le deuxième élément de traction (16'),
**en ce que** les extrémités de fourche (24, 25) présentent des dents d'enclenchement (23') disposées latéralement,
et **en ce qu'**une pièce de fixation (13') réalisée sous forme de disque de serrage peut être emmanchée avec enclenchement sur les extrémités de fourche (24, 25) par des ouvertures d'enclenchement adaptées aux extrémités de fourche (24, 25) et dotées de languettes d'enclenchement.

5. Cassette de filtre (4) avec système de liaison selon la revendication 4, **caractérisée en ce que** le deuxième élément de traction (16') présente deux extrémités de fourche parallèles (24, 25), qui se raccordent l'une à l'autre en forme de U à leur extrémité tournée vers le premier élément de traction (15'),
**en ce que** les extrémités de fourche (24, 25) présentent des dents d'enclenchement (23') disposées latéralement,
**en ce qu'**une pièce de fixation (14') réalisée sous forme de disque de serrage peut être emmanchée avec enclenchement sur les extrémités de fourche (24, 25) par des ouvertures d'enclenchement adaptées aux extrémités de fourche (24, 25) et dotées de languettes d'enclenchement,
et **en ce que** le premier élément de traction (15') et le deuxième élément de traction (16') s'engagent l'un dans l'autre à la manière de maillons de chaîne par leurs extrémités en forme de U tournées l'une vers l'autre.

6. Cassette de filtre (4) avec système de liaison selon la revendication 1, **caractérisée en ce que** le premier élément de traction (15") présente deux tiges de guidage parallèles (26, 27), qui sont mutuellement reliées par l'intermédiaire d'un élément de liaison (28) à leur extrémité tournée vers le deuxième élément de traction (16"), **en ce que** les tiges de guidage (26, 27) présentent des dents d'enclenchement (23") disposées latéralement,
et **en ce qu'**une pièce de fixation (13") réalisée sous forme de disque de serrage peut être emmanchée avec enclenchement sur les tiges de guidage (26, 27) par des ouvertures d'enclenchement adaptées aux tiges de guidage (26, 27) et dotées de languettes d'enclenchement.

7. Cassette de filtre (4) avec système de liaison selon la revendication 6, **caractérisée en ce que** le deuxième élément de traction (16") présente deux tiges de guidage parallèles (29, 30), qui sont reliées l'un à l'autre par l'intermédiaire d'un élément de liaison (31) à leur extrémité tournée vers le premier élément de traction (15"),
**en ce que** les tiges de guidage (29, 30) présentent des dents d'enclenchement (23") disposées latéralement,
**en ce qu'**une pièce de fixation (14") réalisée sous forme de disque de serrage peut être emmanchée avec enclenchement sur les tiges de guidage (29, 30) par des ouvertures d'enclenchement adaptées aux tiges de guidage (29, 30) et dotées de languettes d'enclenchement,
et **en ce que** le premier élément de traction (15") et le deuxième élément de traction (16") s'engagent l'un dans l'autre par leurs extrémités tournées l'une vers l'autre.

8. Cassette de filtre (4) avec système de liaison selon la revendication 1, **caractérisée en ce que** le premier élément de traction (15''', 15"") est réalisé sous la forme d'une douille réceptrice (17''', 17""), qui présente à son extrémité tournée vers le deuxième élément de traction (16''', 16"") un rétrécissement formant une butée (18"', 18"") et qui se poursuit, à son extrémité opposée au deuxième élément de traction (16''', 16""), par une pièce de fixation annulaire (13''', 13"").

9. Cassette de filtre (4) avec système de liaison selon la revendication 8, **caractérisée en ce que** le deuxième élément de traction (16''') est réalisé sous la forme d'une tige de guidage (32) à l'extrémité libre de laquelle, tournée vers le premier élément de traction (15'''), est disposée une butée (33),
**en ce que** la tige de guidage (32) présente un filetage (34) à l'extrémité opposée à la butée (33),
**en ce que** le deuxième élément de traction (16''') peut être emmanché dans le premier élément de traction (15'''),
**en ce que** la butée (33) du deuxième élément de traction (16''') peut être amenée en butée contre la butée (18"') formée par le rétrécissement du premier élément de traction (15'''),
et **en ce qu'**une douille filetée conçue comme pièce de fixation (14"') peut être vissée sur l'extrémité côté filetage de la tige de guidage (32).

10. Cassette de filtre (4) avec système de liaison selon la revendication 8, **caractérisée en ce que** le deuxième élément de traction (16"") est réalisé sous la forme d'une tige de guidage (35) à l'extrémité libre de laquelle, tournée vers le premier élément de traction (15""), est disposée une butée (36),
**en ce que** le deuxième élément de traction (16"") peut être emmanché dans le premier élément de traction (15""),
**en ce que** la butée (36) du deuxième élément de traction (16"") peut être amenée en butée contre la butée (18"") formée par le rétrécissement du premier élément de traction (15""),
et **en ce qu'**un disque de serrage à effet de ressort, conçu comme pièce de fixation (14""), peut être emmanché sur l'extrémité libre de la tige de guidage (35).

11. Cassette de filtre (4) avec système de liaison selon l'une des revendications 1 à 10, **caractérisée en ce que** la cassette de filtre (4) présente, dans les régions de bords des plaques terminales (6), une pluralité de canaux de passage (3) s'étendant orthogonalement aux plaques terminales (6) et destinés à recevoir chacun un connecteur (2, 2', 2", 2"', 2"").

12. Procédé pour exercer une force de précontrainte sur une cassette de filtre (4) pouvant être insérée dans un porte-filtre et dotée d'un système de liaison selon l'une des revendications 1 à 11, **caractérisé en ce qu'**on exécute les étapes suivantes :
a) montage partiel d'un connecteur (2, 2', 2", 2''', 2"") en emmanchant l'un dans l'autre deux éléments de traction (15, 16, 15', 16', 15", 16", 15''', 16"', 15"", 16"") s'engageant l'un dans l'autre de manière à pouvoir être déplacés longitudinalement,
b) emmanchement du connecteur (2, 2', 2", 2''', 2"") dans un canal de passage (3) disposé orthogonalement aux plaques terminales (6) de la cassette de filtre (4), sachant que le premier élément de traction (15, 15', 15", 15''', 15"") est inséré par sa pièce de fixation terminale (13, 13', 13", 13''', 13"") dans un premier gradin (12) du canal de passage (3) dans la première plaque terminale (6), et sachant que le deuxième élément de traction (16, 16', 16", 16"', 16"") fait saillie par son extrémité libre hors du deuxième gradin (12), disposé dans la deuxième plaque terminale (6), du canal de passage (3),
c) emmanchement ou vissage de la pièce de fixation terminale (14, 14', 14", 14"', 14"") du deuxième élément de traction (16, 16', 16", 16''', 16"") sur l'extrémité libre du deuxième élément de traction (16, 16', 16", 16''', 16"") en exerçant la force de précontrainte prévue.

13. Procédé selon la revendication 12, **caractérisé en ce que** les étapes a) à c) sont répétées avec d'autres connecteurs (2, 2', 2", 2''', 2"").

14. Procédé selon la revendication 12 ou 13, **caractérisé en ce que** la cassette de filtre (4) est serrée entre deux plaques de serrage du porte-filtre et une force de pression d'application se superposant à la force de précontrainte est exercée sur les plaques terminales (6), sachant que les éléments de traction (15, 16, 15', 16', 15", 16", 15''', 16''', 15"", 16"") sont poussés l'un vers l'autre d'une manière correspondante aux plaques terminales (6).
